# EUROPÄISCHE PATENTSCHRIFT

(11) **EP 2 307 230 B1**
(45) Veröffentlichungstag und Bekanntmachung des Hinweises auf die Patenterteilung: **17.04.2013**
(21) Anmeldenummer: 10704502.3
(22) Anmeldetag: 03.02.2010
(51) Int. Cl.: B60N 2/02, B60N 2/225, B60N 2/427, B60N 2/44, B60N 2/16, B60N 2/18

(54) **ANTRIEBSEINRICHTUNG**
DRIVE DEVICE
DISPOSITIF D'ENTRAÎNEMENT

(30) Priorität: 12.02.2009 DE 102009008576
(43) Veröffentlichungstag der Anmeldung: 13.04.2011
(73) Patentinhaber: KEIPER GmbH & Co. KG, 67657 Kaiserslautern (DE)
(72) Erfinder: SCHÜLER, Rolf, 42579 Heiligenhaus (DE); BOSSMANNS, Bernd, 40822 Mettmann (DE)
(74) Vertreter: Kalkoff & Partner
(86) Internationale Anmeldenummer: PCT/EP2010/000650
(87) Internationale Veröffentlichungsnummer: WO 2010/091816

(56) Entgegenhaltungen:
- WO-A1-2004/103766
- DE-A1- 10 225 247
- DE-B3- 10 341 001

## Beschreibung

Die Erfindung betrifft eine Antriebseinrichtung mit den Merkmalen des Oberbegriffs des Anspruches 1.

Unabhängig von der Anwendung der Antriebseinrichtung sei das bezüglich der Krafteinleitung ruhende Bauteil als Gestell und das hierzu schwenkbare Bauteil als Abtrieb bezeichnet.

Bei Fahrzeugsitzen ist es bekannt, als Höheneinsteller Viergelenks-Kinematiken einzusetzen, bei denen das hintere, obere Gelenk aufgrund der dort in der Regel geringsten Momentenbelastung sowie aus Bauraumgründen gesperrt wird. Üblicherweise erfolgt dies durch spielarme bzw. spielfreie Sperrmodule oder lastaufnehmende Getriebemotore, die am Gestell gelagert sind und die über ein Ritzel auf eine Verzahnung an der hinteren Schwinge (= Abtrieb) wirken, wodurch letztlich wieder freie oder elastische Spiele in der Kinematik auftreten. Da die für die Lehneneinstellung entwickelten, taumelnde Getriebebeschläge prinzipiell spielfrei sind und die erforderlichen Betriebs- und Crashlasten im oberen, hinteren Gelenkpunkt üblicher Höheneinsteller-Kinematiken durchaus ertragen können, wurde schon vorgeschlagen, eine Antriebseinrichtung zu schaffen, bei welcher ein solcher Getriebebeschlag als lastaufnehmendes und spielfreies Gelenk der hinteren Schwinge und/oder ihrem oberen Gelenkpunkt zugeordnet ist, wobei die Schwinge selbst oder ein Zwischenhebel fest mit dem taumelnden Beschlagteil verbunden und als kraftübertragendes Element genutzt wird. Ein Lösungsansatz, entsprechend dem Oberbegriff des Anspruchs 1 ist aus DE 102 25 247 A1 bekannt, nach der ein Getriebebeschlag mittels Hebel und Schlitz-Zapfen-Führung als Antriebseinrichtung in die Kinematik eingebunden werden kann.

Eine aus der DE 103 41 001 B3 bekannte Lösung, die der Reduzierung der kinematisch bedingten Ungleichförmigkeit aufgrund der taumelnden Bewegung des Getriebebeschlags dient, ist der Einsatz eines Zwischengetriebes mit einer Übersetzung, die auf einer Umdrehung ungleichförmig ist, um in Phasen mit kinematisch bedingter, geringer Abtriebsgeschwindigkeit der Antriebseinrichtung die Eingangsgeschwindigkeit des Getriebebeschlags zu erhöhen, obwohl der eigentliche Antrieb (Elektromotor oder Schrittschaltwerk) mit gleicher Drehzahl arbeitet.

Die direkte Folge jeglicher Konstruktion mit direkter Verbindung eines taumelnden Beschlagsteils in eine Kinematik mittels eines Hebels ist jedoch eine am Gelenkpunkt des Hebels ungleichförmige Bewegungsgeschwindigkeit und -richtung, da die effektive Wirklänge dieses Hebels sowie der Ort der Krafteinleitung sich über einen Umlauf betrachtet gravierend ändert. Während bei klassischer Lehnenanwendung der Hebel (nämlich die Lehne) mit typischen 600 mm Länge deutlich länger ist als die Hebellängenänderung im Umlauf (Zahneingriffsradius im Getriebebeschlag etwa ±30 mm, entspricht einer Änderung von 600 mm / ±30 mm = ±5%), ist bei den in Höheneinsteller-Kinematiken typischen Hebellängen von etwa 100 mm die gleich große Hebellängenänderung von deutlicher Auswirkung (100 mm / ±30 mm = etwa ±30%). Auch wenn durch geschickte Wahl von Kinematik-Anlenkpunkten diese erhebliche Veränderung der Kraft- und Geschwindigkeitsverhältnisse in Ihrer Auswirkung reduziert (etwa halbiert) werden kann, so sind dennoch 15% Änderung von Geschwindigkeits- oder Kraftverhältnissen innerhalb einer Kinematik nachteilig gegenüber konstanten Verstellungen.

Der Erfindung liegt die Aufgabe zu Grunde, eine Antriebseinrichtung der eingangs genannten Art hinsichtlich der Änderungen von Geschwindigkeits- oder Kraftverhältnissen zu verbessern. Diese Aufgabe wird erfindungsgemäß durch eine Antriebseinrichtung mit den Merkmalen des Anspruches 1 gelöst. Vorteilhafte Ausgestaltungen sind Gegenstand der Unteransprüche.

Mit der erfindungsgemäßen Antriebseinrichtung wird die vorhandene gleichförmige Drehbewegung des Getriebebeschlags für eine gleichförmige Bewegung des Abtriebs relativ zum Gestell genutzt, während die überlagerte Taumelbewegung herausgefiltert wird, so dass sie nicht auf den Abtrieb übertragen wird. Hierzu ist das erfindungsgemäß zwischen Abtrieb und Beschlagteil vorgesehene Übertragungselement torsionssteif in Umfangsrichtung der Achse des Abtriebs, so dass die Drehbewegung entlang des Übertragungselementes unmittelbar übertragen wird, und zugleich biegeweich in radialer Richtung der Achse, so dass die Taumelbewegung das Übertragungselement in der radialen Richtung hin und her biegt, ohne dass eine Weiterleitung stattfindet.

Bei einer Verwendung für einen Fahrzeugsitz kann die erfindungsgemäße Antriebseinrichtung auf einer Seite (in Kombination mit einem einfachen Gelenk) oder auf beiden Seiten vorgesehen sein, wobei in letzterem Fall eine Synchronisation notwendig ist, die mechanisch oder elektrisch erfolgen kann. Die Antriebseinrichtung wird ihrerseits manuell oder motorisch angetrieben. Es können Baukastensysteme mit den verschiedenen Ausführungs- und Anordnungsmöglichkeiten geschaffen werden.

Im folgenden ist die Erfindung anhand von sechs in der Zeichnung dargestellten Ausführungsbeispielen näher erläutert. Es zeigen
- Fig. 1: eine teilweise schematisierte und teilweise geschnittene Darstellung des ersten Ausführungsbeispiels,
- Fig. 2: eine teilweise schematisierte und teilweise geschnittene Darstellung des zweiten Ausführungsbeispiels,
- Fig. 3: eine teilweise schematisierte und teilweise geschnittene Darstellung des dritten Ausführungsbeispiels,
- Fig. 4: eine teilweise schematisierte und teilweise geschnittene Darstellung des vierten Ausführungsbeispiels,
- Fig. 5: eine teilweise schematisierte und teilweise geschnittene Darstellung des fünften Ausführungsbeispiels,
- Fig. 6: eine teilweise schematisierte und teilweise geschnittene Darstellung des sechsten Ausführungsbeispiels, und

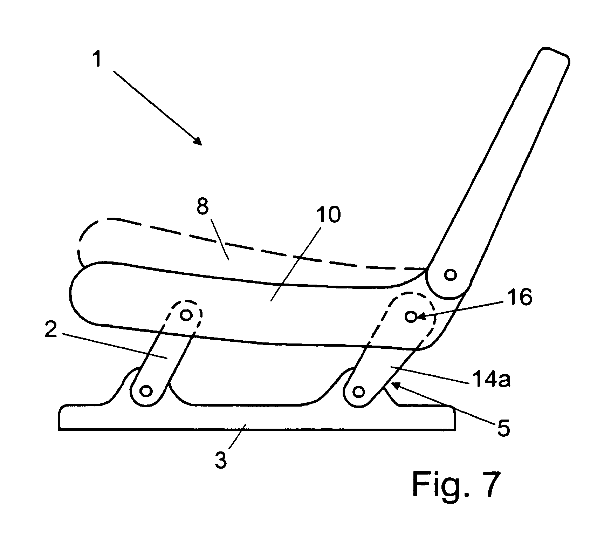

- Fig. 7: eine schematisierte Seitenansicht des Fahrzeugsitzes.

Ein Fahrzeugsitz 1 für ein Kraftfahrzeug ist mit seinem Unterbau 3, beispielsweise zwei Sitzschienenpaaren, am Fahrzeugboden des Kraftfahrzeuges befestigt. Der Fahrzeugsitz 1 weist einen Höheneinsteller 5 auf, mittels dessen die Höhe des Sitzkissens 8 des Fahrzeugsitzes 1 über dem Fahrzeugboden (und damit über dem Unterbau 3) einstellbar ist. Der Höheneinsteller 5 umfasst einen Sitzrahmen 10, welcher das Sitzkissen 8 trägt, und auf beiden Fahrzeugsitzseiten je eine vordere Schwinge 12 und je eine hintere Schwinge 14a, 14b, von denen jede an ihrem oberen Ende am Sitzrahmen 10 und an ihrem unteren Ende am Unterbau 3 angelenkt sind. Somit bilden auf jeder Fahrzeugsitzseite die dort vorhandenen Schwingen, der Unterbau 3 und der Sitzrahmen 10 die vier Getriebeglieder eines Viergelenks.

Die beiden Fahrzeugsitzseiten sind weitgehend gleich ausgebildet. Die eine der beiden Fahrzeugsitzseiten sei als erste Fahrzeugsitzseite und die dortige hintere Schwinge als erste Schwinge 14a bezeichnet. Entsprechend sei die andere Fahrzeugsitzseite als zweite Fahrzeugsitzseite und die dortige hintere Schwinge als zweite Schwinge 14b bezeichnet. Die miteinander fluchtenden Gelenkpunkte zwischen dem Sitzrahmen 10 und den beiden hinteren Schwingen 14a, 14b definieren eine Achse A, auf welche sich ein nachfolgend verwendetes Zylinderkoordinatensystem bezieht. Wenigstens auf der ersten Fahrzeugsitzseite ist am Gelenkpunkt zwischen erster Schwinge 14a und Sitzrahmen 10 ein Getriebebeschlag 16 vorgesehen, wodurch eine Antriebseinrichtung definiert wird. Der Sitzrahmen 10 dient als Gestell, eine der beiden hinteren Schwingen 14a, 14b als Abtrieb. Der Getriebebeschlag 16 dient sowohl zum Antreiben des Höheneinstellers 5 als auch zum Sperren desselben.

Bei dem Getriebebeschlag 16 handelt es sich um ein selbsthemmendes Exzenterumlaufgetriebe, dessen beide Beschlagteile 16a, 16b eine relative Drehbewegung (um die Achse A) mit überlagerter Taumelbewegung (in einer Ebene senkrecht zur Achse A) ausführen. Der innere Aufbau des Getriebebeschlag 16 ist beispielsweise in der DE 44 36 101 A1 oder in der DE 101 44 840 A1 offenbart. Der Getriebebeschlag 16 kann manuell oder motorisch angetrieben werden, wobei eine sich drehende, vorzugsweise mit der Achse A fluchtende Antriebswelle mittels eines Mitnehmers den Exzenter mitnimmt.

Der Getriebebeschlag 16 weist in baulicher Hinsicht eine Scheibenform auf, wie sie beispielsweise in der DE 101 05 282 A1 offenbart ist. Dabei ist der Getriebebeschlag 16 auf der Achse A angeordnet und weist radial außen einen Umklammerungsring 16c auf, welcher wenigstens ein Beschlagteil 16a übergreift und vorzugsweise mit dem anderen Beschlagteil 16b fest verbunden ist. Die Scheibenform erlaubt die bauliche Integration des Getriebebeschlags 16 in den Gelenkpunkt zwischen der ersten Schwinge 14a und dem Sitzrahmen 10, vorzugsweise indem der Umklammerungsring 16c wie ein Lagerbolzen (mit großem Durchmesser) wirkt. Ein Beschlagteil 16a steht wenigstens indirekt in Wirkverbindung mit der ersten Schwinge 14a. Das andere Beschlagteil 16b stützt sich vorliegend am Sitzrahmen 10 ab (d.h. wird vom Sitzrahmen 10 getragen) und ist vorzugsweise direkt oder mittels des Umklammerungsrings 16c an demselben befestigt. Wird der Getriebebeschlag 16 angetrieben, schwenken die beiden hinteren Schwingen 14a, 14b relativ zum Sitzrahmen 10, spätestens wenn sich die Antriebsbewegung aufgrund der Steifigkeit des Sitzrahmens 10 in die gesamte Kinematik des Höheneinstellers 5 überträgt. Damit werden die beiden Viergelenke angetrieben und die Höhe des Sitzkissens 8 eingestellt.

Insoweit gleichen sich die näher erläuterten Ausführungsbeispiele.

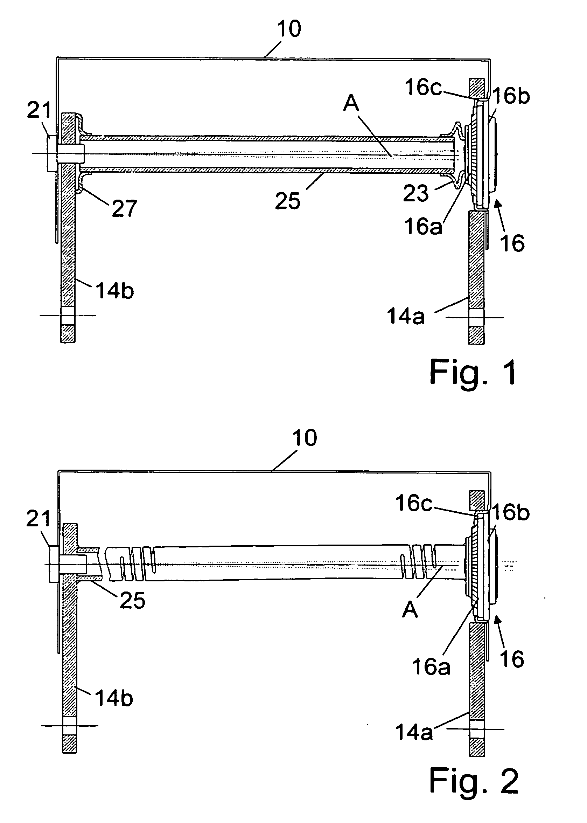

Im ersten Ausführungsbeispiel (Fig. 1) trägt der Sitzrahmen 10 auf der zweiten Fahrzeugsitzseite (d.h. dem Getriebebeschlag 16 gegenüber liegend) einen Lagerzapfen 21, auf dem die zweite Schwinge 14b schwenkbar gelagert ist. Das am Sitzrahmen 10 befestigte Beschlagteil 16b fluchtet mit dem Lagerzapfen 21. Das der zweiten Fahrzeugsitzseite zugewandte Beschlagteil 16a führt im Antriebsfall neben der relativen Drehbewegung die überlagerte Taumelbewegung aus, die in Fig. 1 durch die Mittellinien neben der Achse A angedeutet ist. Dieses Beschlagteil 16a ist mittels einer ersten Membran 23, die torsionssteif (in Umfangsrichtung der Achse A) und zugleich biegeweich (in radialer Richtung der Achse A) ist, mit einem steifen Übertragungsrohr 25 verbunden, welches mittels einer zweiten Membran 27, die ebenfalls torsionssteif (in Umfangsrichtung der Achse A) und zugleich biegeweich (in radialer Richtung der Achse A) ist, drehfest mit der zweiten Schwinge 14b verbunden ist.

In Folge dieser Anordnung, bei der die Lagerung der zweiten Schwinge 14b nur eine reine Drehbewegung zulässt und die Membranen 23, 27 jeweils einen Winkelversatz der Drehachse des Übertragungsrohres 25 relativ zur Achse A erlauben, wird die auf der ersten Fahrzeugsitzseite in vollem Umfang vorhandene Taumelbewegung des Beschlagteils 16a und des dortigen Endes des Übertragungsrohres 25 zur zweiten Fahrzeugsitzseite hin kontinuierlich in Ihrem Betrag kleiner, um letztlich in der Lagerung der zweite Schwinge 14b gleich Null zu sein, so dass nur noch die reine Drehbewegung übertragen wird. Die Drehachse des Übertragungsrohrs 25 läuft auf einer Kegelfläche um die Achse A. Die auf der zweiten Fahrzeugsitzseite erzeugte, reine und gleichförmige Antriebsbewegung für den Höheneinsteller 5 wird in diesem ersten Ausführungsbeispiel über die Steifigkeit des Sitzrahmens 10 in die gesamte Kinematik des Höheneinstellers 5 übertragen. Der Einsatz einer weiteren Querverbindung an nahezu beliebiger Stelle zwischen den Schwingen 14a, 14b kann die Gesamtsteifigkeit noch erhöhen.

In einem zweiten Ausführungsbeispiel (Fig. 2)ist die Funktion der beidseitig vorhandenen Membranen 23 und 27 in das Übertragungsrohr 25 integriert, welches torsionssteife (in Umfangsrichtung der Achse A) und biegeweiche (in radialer Richtung der Achse A) Bereiche aufweist. Dies reduziert die Anzahl der Bauteile. Wie in Fig. 2 zu erkennen ist, wird bei diesem zweiten Ausführung das in den Endbereichen vorzugsweise federharte Übertragungsrohr 25 jeweils spiralförmig abschnittsweise geschlitzt, wodurch es in diesen Bereichen zwar biegeweich wird, jedoch torsionssteif bleibt und somit trotz fester Verbindung der Rohrenden mit dem Beschlagteil 16a und der zweiten Schwinge 14b die Taumelbewegung kompensieren kann.

Die bisher dargestellten Lösungswege erfordern in zumindest einem Bereich der gesamten Kinematik des Höheneinstellers 5, vorzugsweise im Bereich zwischen den hinteren, oberen Gelenkpunkten, ein angesichts der zu übertragenden Antriebs- und Crashlasten relativ massives Übertragungsrohr 25, was den Bauraum und die mögliche Auswahl der Lage der Kinematik-Gelenkpunkte deutlich einschränkt, denn dem einsitzenden Insassen muss aus Komfort- und Sicherheitsgründen stets einen Mindestabstand zu derartigen starren und festen, in der Regel metallischen Bauteilen gewährt werden.

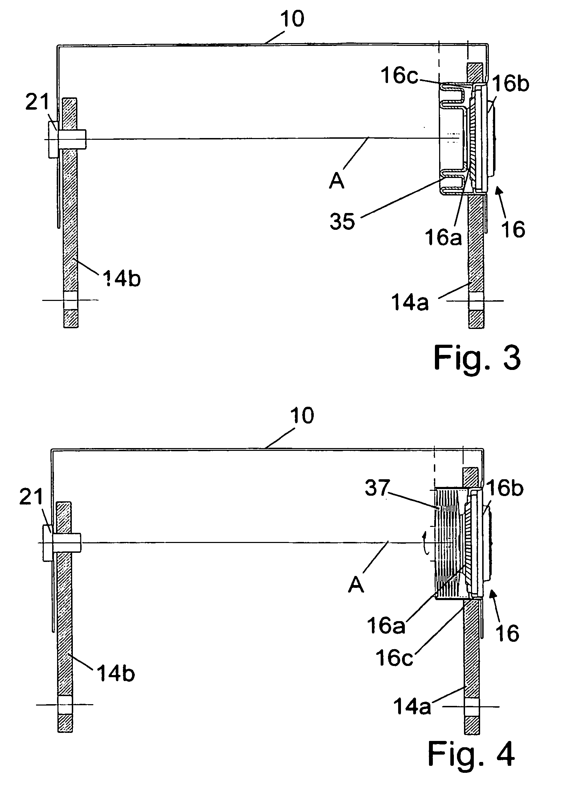

Für ein drittes Ausführungsbeispiel (Fig. 3) wird deshalb gedanklich das Übertragungsrohr 25 in eine Vielzahl einzelner Rohrstücke aufgetrennt, die Rohrstücke mit unterschiedlichem Durchmesser versehen, ineinander geschoben, und mittels Ringscheiben wieder zu einem Bauteil vereint. Das Ergebnis dieses Vorgangs ist ein metallischer Balg 35, welcher wie die Ausgangskonstruktion torsionssteif (in Umfangsrichtung der Achse A) und zugleich biegeweich (in radialer Richtung der Achse A) ist. Die in Fig. 3 zu sehenden Wülste des Balgs 35 sind vor der Montage rotationssymmetrisch und konzentrisch zueinander angeordnet. Der Balg 35 leitet die taumelfreie Drehbewegung direkt auf der gleichen (ersten) Fahrzeugsitzseite wieder in die dortige (erste) Schwinge 14a ein. Der Balg 35, der vorzugsweise einstückig durch Umformung hergestellt wird, ist mit seinem radial inneren Ende am Beschlagteil 16a und mit seinem radial äußeren Ende an der ersten Schwinge 14a befestigt, wo er in einer Abwandlung zusätzlich als Lagerbuchse dienen kann. Der Balg 35 beansprucht nur noch einen scheibenförmigen Bauraum in der direkten Nähe des Getriebebeschlags 16.

Ein viertes Ausführungsbeispiel zeigt Fig. 4, bei dem anstelle des Balgs 35 des dritten Ausführungsbeispiels ein Membrankompensator 37 vorgesehen ist. Der Membrankompensator 37 ist eine Reihe in axialer Richtung der Achse A hintereinander geschachtelter Membranen, bei dem jede Membran, letztlich wie eine Tellerfeder wirkend, einen Teilbereich des in Summe über die Paketbreite zu kompensierenden Winkels übernimmt. Der Membrankompensator 37 ist mit seinem axial inneren Ende am Beschlagteil 16a und mit seinem axial äußeren Ende mittels eines Topfes an der ersten Schwinge 14a befestigt.

Soweit nicht abweichend beschrieben, gleichen die Ausführungsbeispiele zwei bis vier dem ersten Ausführungsbeispiel, insbesondere bezüglich des Lagerzapfens 21.

Alle bisher dargestellten Lösungen zeigen Kinematiken des Höheneinstellers 5, die nur auf einer Fahrzeugsitzseite angetrieben und gesperrt werden. Bei Höheneinstellern 5 mit hohem Komfortanspruch werden häufig die Verbindungspunkte des Sicherheitsgurtes nicht an den Sitzschienen, sondern am Sitzrahmen 10 angebracht, um zu verhindern, dass ein angeschnallter Insasse beim Hochfahren des Fahrzeugsitzes 1 von dem angelegten Sicherheitsgurt in seiner Bewegungsfreiheit eingeschränkt wird. Bei derartigen Anordnungen treten im Crashfall erheblich höhere Kräfte innerhalb der Kinematik des Höheneinsteller 5 auf, da diese die Belastung an den Anbindungspunkten des Sicherheitsgurtes beidseitig in die Sitzschiene weiterleiten muss. In einigen bekannten Anwendungen wird aus diesem Grund bei einseitiger Sperrung des Sitzhöheneinstellers auf der anderen Seite ein crashaktives Zusatzsperrsystem, ein sogenanntes Crashgesperre, eingesetzt, welches durch die dynamische Lasteinleitung selbst aktiviert wird und die hohen Lasten an der Kinematik vorbei in die Schiene einleitet.

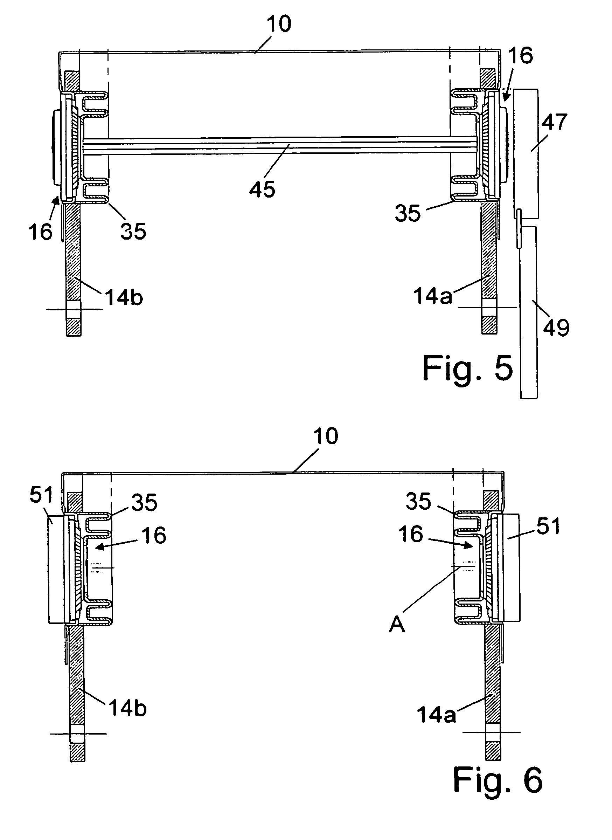

Die in Fig. 3 und 4 dargestellten Lösungen für Einzelsperrelemente können für die gerade beschriebenen Höheneinsteller 5 doppelt, nämlich beidseitig, Verwendung finden und erlauben somit die Realisierung eines stets beidseitig lastaufnahmefähigen Höheneinstellers 5. Bei diesem Höheneinsteller 5 entfällt nicht nur die in der Regel schwierig abzustimmende, die Dynamik berücksichtigende Auslegung des Crashgesperres, sondern darüber hinaus können die Struktur-Bestandteile des Höheneinstellers, also vornehmlich der Sitzrahmen 10 mit seinen Seitenteilen, die Querverbindungen und die Schwingen 12, 14a, 14b aufgrund der besseren und symmetrischen Belastung erheblich schwächer und damit gewichts- und kostenoptimaler ausgeführt werden. Fig. 5 zeigt ein fünftes Ausführungsbeispiel, bei dem beidseitig Getriebebeschläge 16 vorgesehen sind. Auf jeder Fahrzeugsitzseite ist das die Taumelbewegung ausführende Beschlagteil 16a mittels eines Balgs 35 (oder alternativ eines Membrankompensators 37) torsionssteif (in Umfangsrichtung der Achse A) und zugleich biegeweich (in radialer Richtung der Achse A) mit der dort vorhandenen Schwinge 14a, 14b verbunden, wie bei Fig. 3 beschrieben. Um beide Getriebebeschläge 16 synchron anzutreiben, ist als gemeinsame Antriebswelle zwischen den beiden Fahrzeugsitzseiten eine Übertragungsstange 45 vorgesehen. Im Vergleich zum Übertragungsrohr 25 des ersten und zweiten Ausführungsbeispiels weist diese profilierte Übertragungsstange 45 einen erheblich geringeren Durchmesser auf und beschränkt den Bauraum somit deutlich weniger als die crashlast-aufnehmenden, stabilen Übertragungsrohre 25 des ersten und zweiten Ausfükungsbeispiels.

In Fig. 5 ist außer den beidseitig angebrachten Getriebebeschlägen 16 und der Übertragungsstange 45 ein Schrittschaltwerk 47 sowie der zu dessen Bedienung erforderliche Bedienhebel 49 angedeutet. Das hier einzusetzende Schrittschaltwerk 47 nimmt entgegen bekannten Ausführungsformen keine Betriebs- und Crashlasten auf und kann somit einfacher, kostengünstiger und leichter ausgeführt werden. Diverse Lösungen für ein derartiges Schrittschaltwerk 47, dessen Bedienhebel 49 auch mittels einfachem Gestänge an eine andere Position verlegt werden kann, sind an sich bekannt.

Im Falle der elektrischen Betätigung eines Höheneinstellers 5 bietet die beidseitige Anordnung der Getriebebeschläge 16 darüber hinaus die Möglichkeit, selbst die dünne Übertragungsstange 45 noch vollständig zu eliminieren. Hierzu finden im sechsten Ausführungsbeispiel (Fig. 6) zwei separate, gegebenenfalls elektrisch miteinander synchronisierte und vorzugsweise elektronisch kommutierte Antriebsmotoren 51 Verwendung. Fig. 6 zeigt dies schematisch, wobei als Übertragungselement ein Balg 35 wie in Fig. 3 dient. Bei diesem sechsten Ausführungsbeispiel kann die Struktur des Höheneinstellers 5 in Querrichtung sehr weich gestaltet werden, da zwischen den beiden Fahrzeugsitzseiten keine Antriebsbewegung übertragen wird und beidseitig eine Lastaufnahme erfolgt. Dann kann auch nur einer der Antriebsmotoren 51 aktiviert werden, um das Sitzkissen 8 seitlich im Fahrzeug zu neigen und somit den Einstiegs- und Ausstiegskomfort zu erhöhen oder die Seitenneigung fahrdynamisch anzupassen, d.h. die Fliehkräfte, die während der Kurvenfahrt auf den Insassen wirken, zu kompensieren.

Sollte aus Bauraum- oder anderen Gründen ein solcher Getriebebeschlag 16 mit reiner, gleichförmiger Abtriebsbewegung nicht direkt in einem der Gelenkpunkte der Kinematik angeordnet werden können, so ist natürlich auch eine Anordnung an anderer Stelle und eine Weiterleitung der Abtriebsbewegung mittels Hebel, wie beispielsweise aus der DE 103 41 001 A1 bekannt, unter Zwischenschaltung eines Kompensationselementes (beispielsweise Balg 35 oder Membrankompensator 37) möglich.

Die beschriebenen Lösungen des dritten und vierten Ausführungsbeispiels (Fig. 3 und 4) bieten die Möglichkeit, eine in sich modulare, unter Verwendung gleicher Strukturteile herzustellende Familie von Höheneinstellern 5 zu generieren, bei der wahlweise ein taumelkompensierender Getriebebeschlag 16 für elektrische oder manuell aktive, oder auch ein ausserhalb der beanspruchten Erfindung liegender Rastbeschlag, wie beispielsweise aus der EP 1 676 502 A2 bekannt, mit Federunterstützung für manuelle, passive Höheneinsteller 5 Verwendung findet.

Obwohl sich alle bisher dargestellten Einbau- und Nutzungsvarianten der erfindungsgemäßen Antriebseinrichtung auf Höheneinsteller 5 bezogen haben, ist der Einsatz aller beschriebenen Lösungen natürlich auch im Bereich der Herkunft dieser Beschläge, nämlich als Lehneneinsteller, möglich. Zwar bedeutet dies im Vergleich zur heutigen Standardanwendung einen Mehraufwand, dieser aber ermöglicht für Anwendungen mit hohem Komfortanspruch ein gleichförmigeres Einstellverhalten, insbesondere bei akustisch sensiblen, elektrisch angetriebenen Ausführungen. Beispielsweise dient der Sitzrahmen 10 als Gestell, die Lehne als Abtrieb. Schließlich ist auch der Einsatz der erfindungsgemäßen Antriebseinrichtung für einen Neigungseinsteller möglich, mittels dessen die Neigung des Sitzkissens 8 relativ zum Unterbau 3 einstellbar ist, und der sich vom Höheneinsteller 5 im wesentlichen nur durch eine andere Kinematik unterscheidet. Weitere Einsatzmöglichkeiten sind denkbar, beispielsweise eine Drehung des Fahrzeugsitzes 1.

Alle zuvor beschriebenen, torsionssteifen und biegeweichen Übertragungselemente können hinsichtlich ihres elastisch-plastischen Verhaltens nicht nur so ausgelegt sein, dass bei normalen Gebrauchslasten die biegeweichen Bereiche zur Kompensation der Taumelbewegung genutzt werden und die torsionssteifen Bereiche die Lasten möglichst starr übertragen, sondern darüber hinaus so ausgelegt sein, dass im Crashfall, also bei Auftreten deutlich höherer Materialspannungen, beide oder gegebenenfalls auch nur einer der Bereiche eine vorbestimmte (gezielt vorher einkonstruierte), plastische Deformation erfährt und somit kinetische Energie absorbiert und in Verformung umwandelt (dissipiert).

### Bezugszeichenliste

- 1: Fahrzeugsitz
- 3: Unterbau
- 5: Höheneinsteller
- 8: Sitzkissen
- 10: Sitzrahmen
- 12: vordere Schwinge
- 14a: erste Schwinge
- 14b: zweite Schwinge
- 16: Getriebebeschlag
- 16a: Beschlagteil
- 16b: Beschlagteil
- 16c: Umklammerungsring
- 21: Lagerzapfen
- 23: erste Membran
- 25: Übertragungsrohr
- 27: zweite Membran
- 35: Balg
- 37: Membrankompensator
- 45: Übertragungsstange
- 47: Schrittschaltwerk
- 49: Bedienhebel
- 51: Antriebsmotor
- A: Achse

## Patentansprüche

1. Antriebseinrichtung für einen Fahrzeugsitz (1), mit einem dem Fahrzeugsitz (1) zugehörigen Gestell (10), einem dem Fahrzeugsitz (1) zugehörigen Abtrieb (14a, 14b), der am Gestell (10) angelenkt und relativ zu diesem um eine Achse (A) schwenkbar ist, und einem Getriebebeschlag (16), dessen beide Beschlagteile (16a, 16b) im Antriebsfall eine relative Drehbewegung mit überlagerter Taumelbewegung ausführen, wobei ein Beschlagteil (16a) auf den Abtrieb (14a, 14b) einwirkt und das andere Beschlagteil (16b) sich am Gestell (10) abstützt, **dadurch gekennzeichnet, dass** zwischen dem auf den Abtrieb (14a, 14b) einwirkenden Beschlagteil (16a) und dem Abtrieb (14a, 14b) ein Übertragungselement (25, 35, 37) vorgesehen ist, welches torsionssteif in Umfangsrichtung der Achse (A) und zugleich biegeweich in radialer Richtung der Achse (A) ist.

2. Antriebseinrichtung nach Anspruch 1, **dadurch gekennzeichnet, dass** das Übertragungselement (25, 35, 37) die relative Drehbewegung der beiden Beschlagteile (16a, 16b) spielfrei auf den Abtrieb (14a, 14b) überträgt und die Taumelbewegung kompensiert.

3. Antriebseinrichtung nach Anspruch 1 oder 2, **dadurch gekennzeichnet, dass** als Übertragungselement ein Übertragungsrohr (25) vorgesehen ist, welches mittels torsionssteifen und biegeweichen Membranen (23, 27) am Abtrieb (14a, 14b) und an dem auf den Abtrieb (14a, 14b) einwirkenden Beschlagteil (16a) befestigt ist.

4. Antriebseinrichtung nach Anspruch 1 oder 2, **dadurch gekennzeichnet, dass** als Übertragungselement ein Übertragungsrohr (25) vorgesehen ist, welches torsionssteife und biegeweiche Bereiche aufweist, mittels denen es am Abtrieb (14a, 14b) und an dem auf den Abtrieb (14a, 14b) einwirkenden Beschlagteil (16a) befestigt ist.

5. Antriebseinrichtung nach Anspruch 1 oder 2, **dadurch gekennzeichnet, dass** als Übertragungselement ein Balg (35) oder ein Membrankompensator (37) vorgesehen ist, welcher am Abtrieb (14a, 14b) und an dem auf den Abtrieb (14a, 14b) einwirkenden Beschlagteil (16a) befestigt ist.

6. Antriebseinrichtung nach einem der vorhergehenden Ansprüche, **dadurch gekennzeichnet, dass** der Getriebebeschlag (16) in baulicher Hinsicht eine Scheibenform aufweist, mittels derer er in den Gelenkpunkt zwischen Gestell (10) und Abtrieb (14a, 14b) integriert ist.

7. Antriebseinrichtung nach einem der vorhergehenden Ansprüche, **dadurch gekennzeichnet, dass** der Getriebebeschlag (16) manuell, insbesondere mittels eines Schrittschaltwerks, oder motorisch, insbesondere mittels eines Antriebsmotors (51), antreibbar ist.

8. Antriebseinrichtung nach einem der vorhergehenden Ansprüche, **dadurch gekennzeichnet, dass** im Crashfall das Übertragungselement (25, 35, 37) in den torsionssteifen und/oder biegeweichen Bereichen Energie absorbiert.

9. Fahrzeugsitz, insbesondere Kraftfahrzeugsitz, mit einem Höheneinsteller (5), mittels dessen die Höhe eines Sitzkissens (8) über einem Unterbau (3) einstellbar ist, und/oder einem Neigungseinsteller und/oder einem Lehneneinsteller, wobei der Höheneinsteller (5) oder Neigungseinsteller oder Lehneneinsteller eine Antriebseinrichtung nach einem der vorhergehenden Ansprüche aufweist.

10. Fahrzeugsitz nach Anspruch 9, **dadurch gekennzeichnet, dass** der Fahrzeugsitz (1) auf genau einer Fahrzeugsitzseite den Getriebebeschlag (16) aufweist.

11. Fahrzeugsitz nach Anspruch 9, **dadurch gekennzeichnet, dass** der Fahrzeugsitz (1) auf beiden Fahrzeugsitzseiten einen Getriebebeschlag (16) aufweist.

## Claims

1. A drive device for a vehicle seat (1) having a frame (10) belonging to the vehicle seat (1), an output drive (14a, 14b) belonging to the vehicle seat (1) that is hinged at the frame (10) and can be pivoted relative thereto about an axis (A), and a geared fitting (16), both fitting parts (16a, 16b) of which perform in the case of operation a relative rotational movement with superimposed tumbling motion, one fitting part (16a) acting on the output drive (14a, 14b) and the other fitting part (16b) being supported at the frame (10), **characterized in that** a transfer element (25, 35, 37) is provided between the fitting part (16a) acting on the output drive (14a, 14b) and the output drive (14a, 14b), and is torsion-resistant in the circumferential direction of the axis (A) and at the same time is flexible in a radial direction of the axis (A).

2. The drive device according to claim 1, **characterized in that** the transfer element (25, 35, 37) transfers the relative rotational movement of both fitting parts (16a, 16b) without play onto the output drive (14a, 14b), and compensates the tumbling motion.

3. The drive device according to claim 1 or claim 2, **characterized in that** a transfer tube (25) is provided as a transfer element, and is fastened at the output drive (14a, 14b) by means of torsion-resistant and flexible membranes (23, 27) and is fastened at the fitting part (16a) acting on the output drive (14a, 14b).

4. The drive device according to claim 1 or claim 2, **characterized in that** a transfer tube (25) is provided as a transfer element, and has torsion-resistant and flexible regions, by means of which the tube is fastened at the output drive (14a, 14b) and at the fitting part (16a) acting on the output drive (14a, 14b).

5. The drive device according to claim 1 or claim 2, **characterized in that** a bellows (35) or a membrane compensator (37) is provided as a transfer element, and is fastened at the output drive (14a, 14b) and at the fitting part (16a) acting on the output drive (14a, 14b).

6. The drive device according to one of the preceding claims, **characterized in that** the geared fitting (16) with regard to structure is shaped as a disc, by means of which the fitting is integrated into the hinge point between frame (10) and output drive (14a, 14b).

7. The drive device according to one of the preceding claims, **characterized in that** the geared fitting (16) can be driven manually, in particular by means of a stepping mechanism, or by a motor, in particular by means of a drive motor (51).

8. The drive device according to one of the preceding claims, **characterized in that** in the event of a crash the transfer element (25, 35, 37) absorbs energy in the torsion-resistant and/or flexible regions.

9. A vehicle seat, in particular a motor vehicle seat, having a height adjuster (5), by means of which the height of a seat cushion (8) arranged above a base frame (3) can be adjusted, and/or an incline adjuster and/or a seat back adjuster, wherein the height adjuster (5) or the incline adjuster or the seat back adjuster have a drive device according to one of the preceding claims.

10. The vehicle seat according to claim 9, **characterized in that** the vehicle seat (1) has the geared fitting (16) on exactly one side of the vehicle seat.

11. The vehicle seat according to claim 9, **characterized in that** the vehicle seat (1) has a geared fitting (16) on both sides of the vehicle seat.

## Revendications

1. Dispositif d'entraînement pour un siège de véhicule (1), comprenant un châssis-support (10) associé au siège de véhicule (1), un entraînement de sortie (14a, 14b) associée au siège de véhicule (1) qui est articulée sur le châssis-support (10) et est pivotante par rapport à celui-ci autour d'un axe (A), et une ferrure à engrenage (16) dont les deux parties de ferrure (16a, 16b) exécutent en cas d'entraînement un mouvement rotatif relatif avec mouvement basculant superposé, une partie de ferrure (16a) agissant sur l'entraînement de sortie (14a, 14b) et l'autre partie de ferrure (16b) s'appuyant sur le châssis-support (10), **caractérisé en ce que** entre la partie de ferrure (16a) agissant sur l'entraînement de sortie (14a, 14b) et l' entraînement de sortie (14a, 14b) est prévu un élément de transmission (25, 35, 37) qui est rigide à la torsion dans le sens périphérique de l'axe (A) et simultanément souple en flexion dans le sens radial de l'axe (A).

2. Dispositif d'entraînement selon la revendication 1, **caractérisé en ce que** l'élément de transmission (25, 35, 37) transmet le mouvement rotatif relatif des deux parties de ferrure (16a, 16b) sans jeu sur l'entraînement de sortie (14a, 14b) et compense le mouvement basculant.

3. Dispositif d'entraînement selon la revendication 1 ou 2, **caractérisé en ce qu'**est prévu comme élément de transmission un tube de transmission (25) qui est fixé au moyen de membranes rigides à la torsion et souples en flexion (23, 27) sur l'entraînement de sortie (14a, 14b) et sur la partie de ferrure (16a) agissant sur l'entraînement de sortie (14a, 14b).

4. Dispositif d'entraînement selon la revendication 1 ou 2, **caractérisé en ce qu'**est prévu comme élément de transmission un tube de transmission (25) qui comporte des zones rigides à la torsion et souples en flexion au moyen desquelles il est fixé sur l'entraînement de sortie (14a, 14b) et sur la partie de ferrure (16a) agissant sur l'entraînement de sortie (14a, 14b).

5. Dispositif d'entraînement selon la revendication 1 ou 2, **caractérisé en ce qu'**est prévu comme élément de transmission un soufflet (35) ou un compensateur de membrane (37) qui est fixé sur l'entraînement de sortie (14a, 14b) et sur la partie de ferrure (16a) agissant sur l'entraînement de sortie (14a, 14b).

6. Dispositif d'entraînement selon une des revendications précédentes, **caractérisé en ce que** la ferrure à engrenage (16) présente d'un point de vue de la construction une forme de disque qui lui permet d'être intégrée au centre du joint articulé entre le châssis-support (10) et l'entraînement de sortie (14a, 14b).

7. Dispositif d'entraînement selon une des revendications précédentes, **caractérisé en ce que** la ferrure à engrenage (16) peut être commandée manuellement, en particulier au moyen d'un mécanisme pas à pas, ou de façon motorisée, en particulier au moyen d'un moteur de commande (51).

8. Dispositif d'entraînement selon une des revendications précédentes, **caractérisé en ce que** l'élément de transmission (25, 35, 37) absorbe l'énergie en cas d'accident dans les zones rigides à la torsion et/ou souples en flexion.

9. Siège de véhicule, en particulier siège de véhicule automobile, comprenant un dispositif de réglage de la hauteur (5) qui permet de régler la hauteur d'un coussin (8) au-dessus d'une infrastructure (3), et/ou un dispositif de réglage d'inclinaison et/ou un dispositif de réglage de dossier, le dispositif de réglage de la hauteur (5) ou le dispositif de réglage d'inclinaison ou le dispositif de réglage de dossier comportant un dispositif d'entraînement selon une des revendications précédentes.

10. Siège de véhicule selon la revendication 9, **caractérisé en ce que** le siège de véhicule (1) présente la ferrure à engrenage (16) sur exactement un côté du siège de véhicule.

11. Siège de véhicule selon la revendication 9, **caractérisé en ce que** le siège de véhicule (1) présente une ferrure de transmission (16) sur les deux côtés du siège de véhicule.
